Europäisches Patentamt

European Patent Office

Office européen des brevets

(19)

(11) Numéro de publication: **0 046 112**
**B1**

(12) FASCICULE DE BREVET EUROPEEN

(45) Date de publication du fascicule du brevet: **26.02.86**

(51) Int. Cl.⁴: **F 24 J 3/00, F 25 B 15/06**

(21) Numéro de dépôt: **81401260.5**

(22) Date de dépôt: **05.08.81**

(54) **Dispositif et systèmes pour la revalorisation d'énergie thermique à bas niveau mettant en oeuvre des phénomènes d'évaporation et de mélange de deux fluides en équilibre de pression de vapeur sous des températures différentes.**

(30) Priorité: **11.08.80 FR 8017676**
**16.07.81 FR 8113846**

(43) Date de publication de la demande:
**17.02.82 Bulletin 82/07**

(45) Mention de la délivrance du brevet:
**26.02.86 Bulletin 86/09**

(84) Etats contractants désignés:
**BE DE GB LU NL SE**

(56) Documents cités:
**EP-A-0 001 296**
**EP-A-0 026 257**
**EP-A-0 036 209**
**DE-A-1 444 337**
**DE-A-2 552 538**
**DE-A-2 648 855**
**FR-A- 840 283**
**FR-A-1 056 314**
**FR-A-2 162 607**
**FR-A-2 180 526**
**GB-A- 372 339**
**GB-A- 422 150**
**US-A-1 683 434**
**US-A-2 182 453**

(73) Titulaire: **Etablissement Public dit: CENTRE NATIONAL DE LA RECHERCHE SCIENTIFIQUE (CNRS)**
**15, Quai Anatole France**
**F-75700 Paris (FR)**

(72) Inventeur: **Le Goff, Pierre Lab.des Sciences du génie Chimique**
**Bâtiment ENSIC 1, rue Grandville**
**F-54052 Nancy Cedex (FR)**

(74) Mandataire: **Lerner, François**
**5, rue Jules Lefebvre**
**F-75009 Paris (FR)**

(56) References cited:
**US-A-3 483 710**
**US-A-4 009 575**
**US-A-4 223 535**
**ASHRAE JOURNAL, vol. 5, juillet 1963, R. ZITO JR: "Heat pump utilizing the latent heat of dissolution; a two-component system", pages 24-34**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un dispositif et des systèmes permettant la revalorisation et le stockage d'énergie thermique à bas niveau mettant en oeuvre des phénomènes d'évaporation et de mélange de deux fluides en équilibre de pression de vapeur sous des températures différentes.

On sait que deux fluides de nature différente peuvent être en équilibre de pression de vapeur sous des températures différentes. Ainsi par exemple, un ballon contenant de l'eau pure et un ballon contenant une solution dans l'eau d'un sel tel que chlorure de lithium, chlorure de calcium ou d'une substance telle que soude, acide sulfurique, gaz ammoniac, ne sont en équilibre de vapeur qu'à des températures différentes. Ainsi, par exemple, la pression de vapeur de l'eau pure à 20°C est sensiblement égale à celle d'une saumure saturée de chlorure de calcium à 50°C et celle d'une solution saturée de chlorure de lithium à 70—80°C ou d'une solution d'acide sulfurique, de soude ou de chlorure de zinc vers 120°C.

Il est possible de mettre à profit ce phénomène pour faire "bouillir" à basse température un liquide que l'on appellera "solvant" tel que de l'eau, en utilisant comme condenseur un volume dans lequel est maintenu à température plus élevée un mélange formé par dissolution dans le solvant d'un autre corps, que l'on appellera "soluté", qui a la propriété d'abaisser la pression de vapeur du solvant. On peut faire travailler la vapeur dans une turbine. On peut également mettre à profit la différence de températures des solutions pour lesquelles il y a équilibre de vapeur pour transférer des calories apportées à bas niveau au solvant liquide et les récupérer à un niveau plus élevé, c'est-à-dire une température plus élevée, dans la solution obtenue par mélange, l'énergie "noble" nécessaire étant apportée par l'augmentation d'entropie du système lors du mélange du solvant à la solution concentrée de soluté pour former une solution diluée. Par abréviation, la solution concentrée sera appelée "saumure" et la solution diluée résultant du mélange de la solution concentrée et du solvant sera appelée "diluat". La solution concentrée pourra éventuellement aller jusqu'à être du soluté pur.

Pour que le système fonctionne de façon continue, il faut lui apporter ou régénérer en permanence le solvant (eau par exemple) et le soluté (sel ou autre corps: chlorure de calcium par exemple) nécessaires à l'opération.

Il s'agit en somme d'une "pompe à chaleur": l'énergie noble nécessaire au fonctionnement de la pompe est fourni par l'effet de dilution d'une certaine quantité de soluté dans du solvant.

L'invention propose dispositif et un des systèmes nouveaux et originaux permettant notamment une revalorisation effective et très économique d'énergie thermique à bas niveau particulièrement bien adaptée au chauffage des bâtiments.

L'invention permet également une revalorisation particulièrement élégante et efficace des rejets thermiques à bas niveau de toutes natures, tels que rejets thermiques de centrales nucléaires ou autres, rejets thermiques d'usines, eaux usées, etc. L'invention permet également la valorisation et le stockage de longue durée d'énergies diluées et intermittentes telles que l'énergie solaire et l'énergie du vent froid.

L'invention permet également d'utiliser l'énergie "ambiante" des masses d'eau telles que eaux de rivières, lacs et mers, et eaux d'origine géothermique.

On connait des machines frigorifiques à absorption et également des pompes à chaleur utilisant des phénomènes d'évaporation et de condensation de deux fluides en équilibre de pression à des températures différentes.

Le brevet GB—A—372.339 décrit essentiellement une machine frigorifique à absorption utilisant somme source de refroidissement un condenseur à air à la température ambiante. Un générateur par exemple électrique ou à gaz permet la régénération d'une solution d'absorption laquelle est utilisée à l'intérieur d'un volume thermiquement isolé de l'extérieur pour favoriser l'évaporation d'une solution frigorigène à vaporiser qui diluera la solution d'absorption et empruntera sa chaleur de vaporisation à la paroi intérieure de la chambre à refroidir. On évite autant que faire se peut dans cette installation les échanges thermiques entre les parois en regard d'évaporation et de condensation en prévoyant éventuellement une isolation thermique de liège ou autre et en outre on remplit le volume dans lequel s'effectue la vaporisation du fluide frigorigène d'un gaz neutre tel qu'air ou gaz rare réduisant les échanges thermiques.

Les surfaces d'évaporation de la solution frigorigène à vaporiser et d'absorption sont disposées à des distances relativement proches, le meilleur compromis devant être trouvé pour réduire les échanges de chaleur entre les deux surfaces en regard tout en n'allongeant pas trop le trajet des vapeurs devant se condenser.

Le brevet prévoit en outre le fonctionnement de l'installation en sens inverse par inversion des circuits.

Selon le brevet FR—A—1.056.314 il est décrit une machine frigorifique à absorption utilisant comme source de refroidissement une eau de service vers 25°C qui sera rejetée de l'installation à une température plus élevée. L'installation utilise en outre un bouilleur à brûleur permettant la régénération d'une solution de saumure laquelle est utilisée dans une enceinte pour favoriser l'évaporation d'eau pulvérisée dans cette enceinte sous pression et température réduites en vue de refroidir un circuit d'eau à réfrigérer vers 5°C. L'installation utilise la juxtaposition dans l'enceinte de plusieurs nappes de tubes en parallèle habillés de tôles protectrice sur lesquelles ruissellent en alternance un film d'eau frigorigène et un film de saumure d'absorption, les nappes de tubes étant parcourues respectivement par l'eau à refroidir et par l'eau de service.

L'installation ne prévoit ni ne permet le chauffage à partir de l'eau de service d'un fluide à température plus élevée. La structure décrite ne permet pas un échange direct thermique entre les liquides à réfrigérer et de service et le milieu de vapeur condensable par interposition d'une seule surface métallique séparatrice. En outre, la structure ne se prête pas à un empilage de plusieurs structures identiques permettant d'obtenir pour l'eau à réfrigérer par paliers succesifs des températures de plus en plus différentes de la température de service.

La demande de brevet allemand DE—A—1 444 337 décrit un évaporateur comprenant plusieurs chambres d'évaporation-condensation montées empilées en série et travaillant sous des températures et pressions décroissantes. Il n'est pas question dans ce document d'extraire de la chaleur à une source à plus bas niveau.

L'invention concerne essentiellement un dispositif évaporateur-mélangeur pour la revalorisation d'énergie thermique à bas niveau utilisant le transfert d'énergie d'une première source à température donnée dite "source froide" vers une deuxième source à température plus élevée dite "source chaude" par évaporation d'un premier liquide porté à la température de la "source froide" et condensation de la vapeur dudit premier liquide qui se mélange avec un deuxième. Liquide à la température de la "source chaude", lesdits premier et deuxième liquides ayant à la même température des pressions de vapeur différentes, ledit dispositif étant du type comprenant un dispositif élémentaire constitué:

— d'une surface d'évaporation telle qu'une plaque ou analogue d'échange thermique qui est en contact, par sa face extérieure avec le fluide caloporteur de la source d'énergie à bas niveau et à température comprise entre celle de la source chaude et celle de la source froide, et sur la face intérieure de laquelle ledit premier liquide est amené et circule ou ruisselle sensiblement à la température de la source froide, ladite face intérieure de la plaque formant surface d'évaporation communiquant avec un volume dans lequel s'effectue l'évaporation dudit premier liquide et qui est maintenu sous une pression sensiblement égale et de préférence légèrement inférieure à la pression de vapeur dudit premier liquide à ladite température de la source froide;
— et d'une surface de condensation telle qu'une plaque ou analogue d'échange thermique qui est en contact par sa face extérieure avec le fluide caloporteur permettant d'extraire la chaleur revalorisée produite sensiblement à la température de la source chaude, et sur la face intérieure de laquelle la vapeur dudit premier liquide se condense et se mélange audit deuxième liquide qui ruisselle sensiblement à la température de la source chaude, ladite face intérieure de la plaque formant surface de condensation communiquant avec ledit volume et étant disposée à faible distance et de préférence sensiblement en regard de ladite surface d'évaporation,

Ledit dispositif étant caractérisé en ce que plusieurs dispositifs élémentaires mentionnés sont associés en série, la plaque de condensation du dispositif élémentaire de l'étage de rang $n$ constituant par son autre face la plaque de vaporisation du dispositif élémentaire de l'étage de rang n+1.

Avec de tels dispositifs, on obtient une construction très économique, comparte et très efficace permettant de "remonter" en quelques étages, et par l'emploi de solutions peu corrosives faciles à manipuler, d'une centaine de degrés ou davantage, le niveau de température de la chaleur prélevée à la source froide et qui pourra être utilisée à la température de la source chaude.

L'invention, sa mise en oeuvre, ses buts et ses avantages apparaîtront plus clairement à l'aide de la description qui va suivre, faite en référence aux dessins annexés dans lesquels:

— la figure 1 montre en coupe verticale schématique la constitution d'un évaporateur-mélangeur à un étage utilisé dans le cadre l'invention,
— la figure 2 montre le diagramme de températures lorsqu'on traverse l'évaporateur-mélangeur de la figure 1,
— la figure 3 montre comme la figure 1 un évaporateur-mélangeur conçu selon l'invention, comportant quatre étages montés en série,
— la figure 4 montre le diagramme de températures lorsqu'on traverse le dispositif de la figure 3,
— la figure 5 montre le schéma d'une installation utilisant un dispositif évaporateur à trois étages associé à des échangeurs-récupérateurs de chaleur,
— la figure 6 montre à plus grande échelle un détail de construction utilisant une paroi perméable à la vapeur entre la surface d'évaporation et la surface de condensation d'un évaporateur-mélangeur,
— la figure 7 montre en coupe verticale une installation comprenant un évaporateur-mélangeur à trois étages en série associé à des échangeurs-récupérateurs de chaleur et constituant une construction de forme cylindrique circulaire,
— la figure 8 montre en coupe schématique l'utilisation de plusieurs évaporateurs-mélangeurs montés en série pour engendrer, à partir d'une source de chaleur à bas niveau, de la chaleur à niveau plus élevé et simultanément du froid,

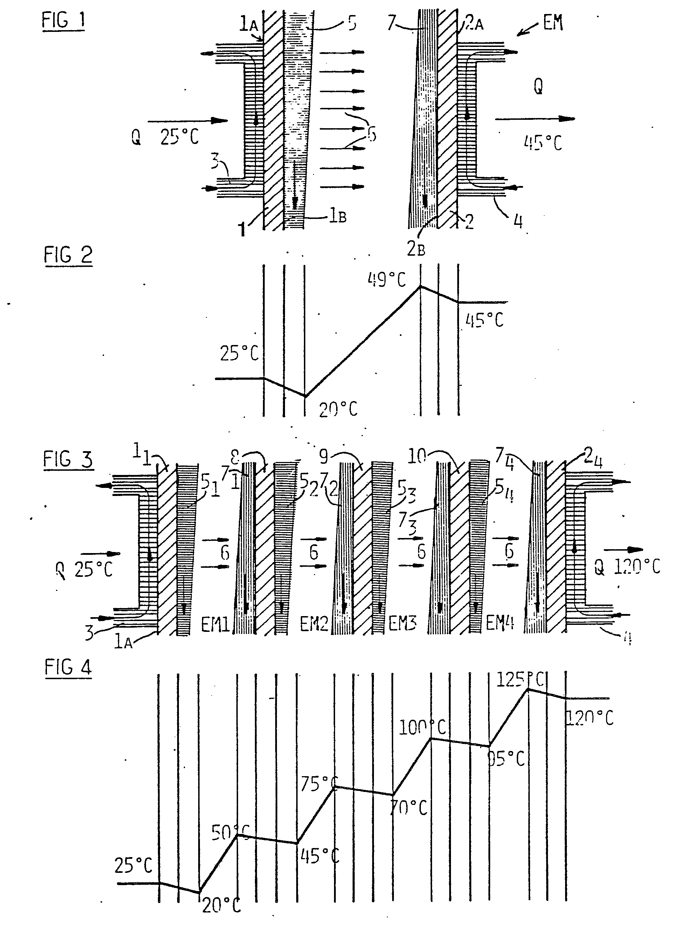

On se reportera tout d'abord à la figure 1, qui illustre un dispositif formant évaporateur-mélangeur utilisé dans le cadre de l'invention repéré dans son ensemble EM, permettant de transférer une quantité de chaleur Q empruntée à une source thermique de bas niveau dite "source froide" vers une deuxième source à température plus élevée dite "source chaude". En d'autres termes, le dispositif évaporateur-mélangeur permet de transférer une quantité de chaleur Q disponible à une température déterminée, par exemple 25°C apportée sur une face d'une première plaque 1 du dispositif et de la libérer après traversée du dispositif sur une face d'une deuxième plaque 2 à une température plus élevée, par exemple 45°C.

Dans l'exemple de réalisation illustré schématiquement, la source de chaleur disponible à bas niveau est constituée par un courant de fluide, par exemple une eau résiduaire sensiblement à la température de la "source froide", amenée par un conduit 3 en échange de chaleur avec une face extérieure 1A de la plaque 1 du dispositif.

La chaleur est prélevée au dispositif à la température de la "source chaude" par un fluide caloporteur, tel par exemple que de l'èau amenée par une conduit 4 en échange de chaleur avec la face extérieure 2A de la plaque 2 du dispositif.

Le transfert de chaleur de la plaque 1 à la plaque 2 et l'élévation du niveau thermique de la chaleur transférée se fait grâce à l'évaporation d'un film d'un fluide (solvant), tel par exemple que de l'eau douce 5 qui ruisselle en descendant le long de la face intérieure 1B de la plaque 1 réchauffée par le fluide 3 constituant la source de chaleur à bas niveau disponible, et par la condensation de la vapeur produite dont le transfert est schématisé par les flèches 6, sur la face intérieure 2B de la plaque 2 en mélange avec un second fluide ou une solution saturée d'un soluté (saumure) s'écoulant en un film mouillant la face 2B de la plaque 2.

Ce transfert de chaleur et le relèvement du niveau de la chaleur transportée sont rendus possibles par l'application des lois de la thermodynamique dès lors que le "solvant" constituant le film 5 et la "solution" constituant le film 7 sont en équilibre de tension de vapeur à des températures différentes.

L'exemple thermique représenté correspond à l'utilisation pour le film 5 d'un film d'eau douce et pour le film 7 d'une solution sensiblement saturée de chlorure de calcium dans l'eau.

La figure 2 donne exemplairement le diagramme des températures permettant d'obtenir, en tenant compte des chutes thermiques à travers les plaques minces d'échange 1 et 2, une température du fluide de sortie de 45°C avec une température de fluide d'entrée à 25°C.

Pour que le dispositif puisse fonctionner, il suffit d'alimenter le plaque 1 en fluide thermique à bas niveau 3, d'alimenter le film d'eau douce 5, d'alimenter le film de saumure 7 et de récupérer la chaleur à plus haut niveau par le fluide d'échange caloporteur 4.

Lors de ce transfert de chaleur, de l'eau douce s'évapore, qu'il faut régénérer ou rajouter en complément, et la saumure se dilue, et il faut soit apporter du sel frais, soit régénérer le sel à partir de la saumure. Bien évidemment, l'énergie "noble" qui permet de relever la température de la chaleur empruntée à la source froide est apportée par la chaleur de dissolution du sel dans l'eau.

Dans la suite de la description, et par manière de simplification, on parlera essentiellement d'eau et de saumure, ou éventuellement de "solvant", "soluté" et de "solution"; il faut bien comprendre que l'invention peut fonctionner avec diverses sortes de solvants et de solutés, pourvu qu'il existe une chaleur de dissolution relativement importante du soluté dans le solvant, plus forte étant la chaleur de dissolution, plus grande étant la possibilité de relever en un seul étage d'évaporation-mélange le niveau thermique de la source froide. Parmi de tels couples de "solvant" et de "soluté", on peut citer notamment les couples suivants:

— eau/chlorure de lithium,
— eau/bromure de lithium,
— eau/chlorure de calcium,
— eau/soude caustique,
— eau/chlorure de zinc,
— eau/acide sulfurique.

L'utilisation de l'eau comme solvant est avantageuse en ce que l'eau est d'une part un solvant économique, et d'autre part présente une chaleur importante de vaporisation.

D'autre part, le choix du couple solvant-solution pourra être déterminé par des conditions d'utilisation locales et des critères de résistance des matériaux et de corrosion. Des additifs pourront éventuellement être ajoutée à la solution pour limiter les phénomènes de corrosion.

Si l'on veut obtenir un relèvement de température important de la source froide à la source chaude, sans faire appel à des couples solvant-soluté très corrosifs tels que eau-acide sulfurique, on monte, comme illustré aux figures 3 et 4, en série plusieurs évaporateurs-mélangeurs conformément à l'invention.

Ainsi, comme illustré à la figure 3, quatre évaporateurs-mélangeurs sont montés en série les une derrière les autres.

Sur la face extérieure 1A de la plaque $1_1$ du premier étage d'évaporateur-mélangeur $EM_1$ est apportée la chaleur à bas niveau de la source froide dont le courant 3 apporte sa chaleur à la plaque $1_1$. Le film d'eau $5_1$ qui ruisselle le long de la plaque $1_1$ s'évapore dans le volume laissé libre entre la plaque $1_1$ et la plaque en regard 8 sur laquelle ruisselle le film de saumure $7_1$ qui assure la dissolution et condensation de la vapeur 6 assurant simultanément le transfert de la chaleur Q et le relèvement de la température comme illustré par le diagramme de température de la figure 4. La plaque 8, par sa face en regard avec la plaque $1_1$, forme surface de condensation de la vapeur, et par son autre face, forme face d'évaporation du film d'eau $5_2$ du deuxième étage d'évaporateur-mélangeur $EM_2$.

Tout se passe dans le deuxième étage $EM_2$ comme dans le premier étage, à ceci près que le film d'eau $5_2$ est évaporé dans le second évaporateur-mélangeur $EM_2$ à une température plus élevée que celle à laquelle le film d'eau $5_1$ est évaporé dans le premier étage $EM_1$. Dans l'exemple illustré, on a supposé un relèvement très modeste de 25°C initial à 45°C au niveau du film $5_2$.

La vapeur du film $5_2$ produite est dissoute et condensée à température plus élevée, soit dans l'exemple illustré 75°C, dans le film de saumure $7_2$ qui ruisselle le long de la face en regard de la plaque suivante 9 formant plaque de condensation du second étage $EM_2$ par une de ses faces et plaque d'évaporation du troisième étage $EM_3$ par son autre face.

De proche en proche, en quatre étages, on peut très facilement, avec un couple eau/solution de chlorure de calcium obtenir un relèvement de température de la chaleur Q empruntée à la source froide 3 de 25°C à 120°C, récupérée par le fluide caloporteur 4 qui recueille la chaleur sur la face extérieure de la dernière plaque $2_4$ de l'évaporateur-mélangeur $EM_4$.

Bien entendu, les pressions dans chaque étage $EM_1$ seront ajustées à la valeur correspondant sensiblement à l'équilibre des pressions de vapeur du couple eau/solution saline aux températures envisagées de chaque étage.

Les différences de pression entre les faces extérieures $1_1$ et $2_4$ du système pourront être facilement encaissées en prévoyant (non représentées) quelques entretoises entre les plaques successives $1_1$, 8, 9, 10, $12_4$.

On notera enfin que les évaporateurs-mélangeurs seront d'autant plus efficaces et d'autant moins encombrants que l'intervalle entre les plaques en regard d'évaporation et de condensation sera réduit, de telle sorte que le transfert de la vapeur, illustré par les flèches 6, pourra être très efficace. Avec un tel dispositif, on peut escompter raisonnablement obtenir des densités de flux de transfert de chaleur de l'ordre de 20 à 30 kw/m² et davantage.

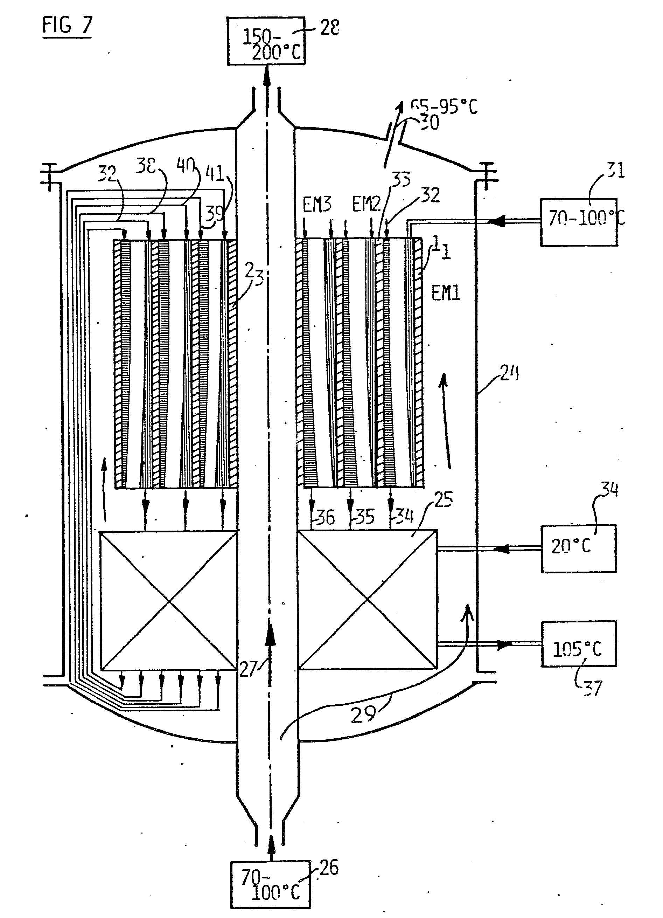

Dans certains cas, notamment dans le cas d'évaporateurs-mélangeurs travaillant à température relativement élevée, on pourra prévoir, comme illustré à la figure 6, interposées entre les plaques 1, 2 on regard de l'évaporateur-mélangeur EM des chicanes 11, 12 par exemple en métal poli réfléchissant, perforées d'un grand nombre de trous, n'offrant pratiquement pas de résistance au passage de la vapeur selon les flèches 6 mais s'opposant efficacement au rayonnement thermique de la plaque chaude 2 vers la plaque froide 1 et également au "primage", c'est-à-dire au transfert du film 5 vers le film 7 de gouttelettes du solvant liquide allant se dissoudre dans la solution 7 sans évaporation, ce qui diminuerait considérablement le transfert de chaleur dans un tel évaporateur-mélangeur.

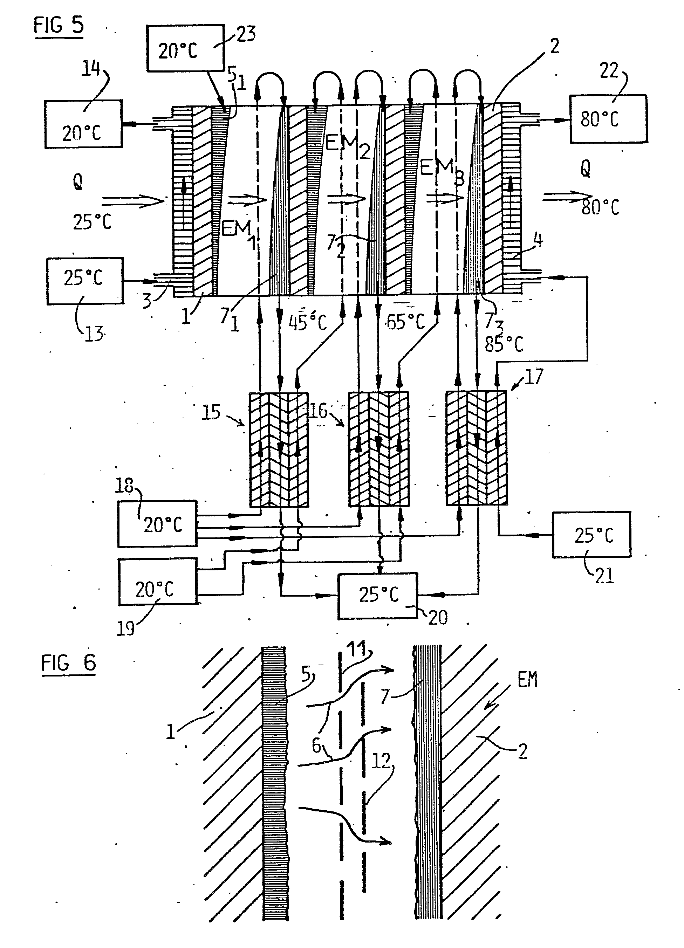

On se reportera maintenant à la figure 5 dans laquelle on a décrit une installation utilisant des évaporateurs-mélangeurs montés en série associés à des échangeurs-récupérateurs de chaleur, et ce pour l'alimentation en chaleur d'une "source chaude" à partir d'une source de chaleur résiduaire constituant "source froide". Dans l'exemple illustré, on a supposé un dispositif comportant trois évaporateurs-mélangeurs montés en série $EM_1$, $EM_2$, $EM_3$ permettant le transfert d'une quantité de chaleur Q fournie par exemple à la température de 25°C et sa récupération à la température supérieure de 80°C.

Dans l'exemple illustré, la chaleur à bas niveau est apportée par le fluide caloporteur 3 à la plaque d'entrée 1 du premier évaporateur-mélangeur $EM_1$. Le fluide caloporteur de la source de chaleur résiduaire pénètre en 13 par exemple à la température de 25°C et ressort en 14 à la température de 20°C. Cet abaissement de température de la "source froide" est mis à profit pour évaporer le film d'eau $5_1$ dans le premier étage d'évaporateur-mélangeur $EM_1$.

Le fonctionnement des trois échangeurs-mélangeurs en série est identique à celui des autres échangeurs de la figure 3 et ne sera pas décrit à nouveau.

Par contre, on met à profit la chaleur sensible des diluats (solutions diluées) $7_1$, $7_2$, $7_3$ quittant les échangeurs-mélangeurs $EM_1$, $EM_2$, $EM_3$ à des températures par exemple respectivement de 45°C, 65°C et 85°C pour réchauffer dans des échangeurs de chaleur de tout type approprié 15, 16, 17 les alimentations de saumure fraîche 18 (amenées par exemple à 20°C) nécessaires au fonctionnement des trois étages, et de même les alimentations d'eau fraîche amenée en 19 (par exemple à 20°C) aux étages 2 et 3 d'évaporateur-mélangeur.

Les solutions diluées sont recueillies en 20, par exemple vers 25°C et seront soit régénérées, soit stockées, soit encore éventuellement rejetées selon les conditions d'implantation de l'installation (notamment si l'on est près de la mer ou de grande fleuves acceptant les rejets de solutions salines diluées).

En 21, on a illustré l'entrée du fluide caloporteur que l'on pourra faire traverser l'échangeur 17 afin de le réchauffer avant de venir, au contact de la plaque 2 de condensation du dernier étage d'évaporateur-mélangeur $EM_3$ pour fournir en 22 le fluide caloporteur chaud sortant par exemple à la température de 80°C.

Sur la figure 5, on a admis que l'eau douce amenée en tête de chaque film en évaporation est entièrement évaporée au cours de son ruissellement sur la paroi. Bien entendu, s'il n'en est pas ainsi et qu'un résidu d'eau pure parvient en pied de paroi, il suffit de munir le dispositif d'un système de gouttières pour collecter cette eau et la ré-injecter en tête de paroi (ce système n'est pas représenté ici).

Les échangeurs à plaques planes du type décrit aux figures précédentes présentent l'avantage d'une simplicité de fabrication et conviennent très bien pour des usages à relativement basse température et faible pression. Par contre, si les températures et donc les pressions augmentent, ces échangeurs, qui comportent de nombreux joints, risquent d'être mal adaptés.

A la figure 7, on a décrit schématiquement un échangeur évaporateur-mélangeur à trois étages en série de type cylindrique permettant le fonctionnement de l'installation sous des pressions et températures élevées.

Selon l'exemple illustré, le dispositif comprend trois échangeurs-mélangeurs disposés concentriquement $EM_1$, $EM_2$, $EM_3$ fonctionnant en série selon le même principe que décrit aux figures précédentes et notamment à la figure 5.

Ces trois échangeurs-mélangeurs sont montés à l'intérieur d'une cuve cylindrique verticale 24.

En dessous des évaporateurs-mélangeurs $EM_1$, $EM_2$, $EM_3$ sont montés, par exemple logés également dans la cuve 24, des échangeurs de chaleur 25 pouvant fonctionner comme les échangeurs 15, 16, 17 de la figure 5.

Le dispositif est essentiellement adapté à la revalorisation des condensats de vapeurs basse pression, sous forme d'eau liquide pouvant être introduite dans l'installation comme illustré en 26 vers 70—100°C par exemple. Une partie de cette eau traverse selon la flèche 27 le centre de l'échangeur et s'échauffe au contact de la dernière paroi de condensation $2_3$ de l'échangeur $EM_3$ jusqu'à la température maximale fonction de l'installation pouvant atteindre par exemple 150 à 200°C. On récupère ainsi en 28 de la vapeur moyenne pression par exemple à 15 bars et 200°C adaptée à tout usage industriel.

Une autre partie de l'eau provenant de l'alimentation à 70—100°C circule selon les flèches 29 à l'intérieur de l'enceinte 24 et sert à réchauffer les premiers étages des échangeurs 25 et le premier étage de l'évaporateur-mélangeur $EM_1$ par sa face extérieure $1_1$ qui baigne à l'intérieur de l'enveloppe 24 dans ce courant d'eau ascendant. Le surplus, s'il y en a, de l'eau ainsi fournie dans l'appareil peut être extrait comme indiqué en 30 par exemple à une température comprise entre 65 et 95°C.

L'eau douce qui ruisselle sur la plaque extérieure $1_1$ de l'échangeur-mélangeur de premier étage est amenée comme indiqué en 31 à la température où elle est disponible de 70 à 100°C, cette eau étant avantageusement constituée par une petite quantité dérivée de la source 26. La saumure est amenée comme indiqué par les flèches 32 sur la face de la plaque 33 communiquant avec l'espace intérieur de l'échangeur $EM_1$ à partir d'une source de stockage 34 par exemple à 20°C et après échauffement à travers les échangeurs 25.

Les échangeurs 25 sont quant à eux réchauffés par les solutions diluées de saumure s'échappant des trois étages des évaporateurs-mélangeurs $EM_1$, $EM_2$, $EM_3$ comme indiqué par les flèches 34, 35, 36 et ce, à des températures allant en croissant jusqu'à la température de la plaque la plus chaude $2_3$ du dernier étage d'échangeur-mélangeur $EM_3$. Les solutions diluées s'échappent des échangeurs 25 comme indiqué en 37 par exemple vers 105°C. Elles sont avantageusement traitées à cette température par évaporation-séparation pour reconstituer la saumure. Ce traitement d'évaporation-séparation pourra se faire dans des appareils qui seront décrits ci-après.

Evidemment, les évaporateurs-mélangeurs $EM_2$ et $EM_3$ fonctionnent de façon semblable à l'échangeur-mélangeur $EM_1$ mais à des températures supérieures. En 38, 39, on a repéré respectivement les alimentations des films d'eau du deuxième et troisième étages (à des températures allant en croissant) et en 40, 41 les alimentations en saumure des deuxième et troisième étages (à des températures allant en croissant).

Pour reconstituer les solutions concentrées (saumures) à partir des solutions diluées (diluats), on pourra utiliser tout dispositif distillateur ou évaporateur-séparateur connu et utilisé industriellement par exemple pour le dessalement de l'eau de mar. Ces évaporateurs-séparateurs pourront du reste avoir une structure semblable ou identique à celle des évaporateurs-mélangeurs EM ci-dessus décrits, mais fonctionnant en quelque sorte en sens inverse.

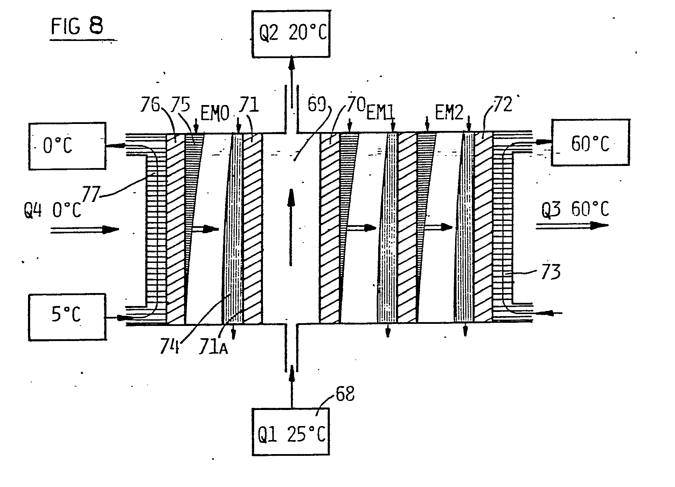

On se reportera maintenant à la figure 8 qui décrit un système particulièrement bien adapté à l'utilisation de bâtiments industriels ou d'habitation.

Dans les habitations, et dans certaines industries, on a besoin à la fois de chaleur, notamment pour le chauffage des bâtiments, et à la fois de froid, notamment pour la conservation de denrées alimentaires et autres.

Conformément à l'invention, il est possible, à partir d'une installation unique de produire à la fois le froid et à la fois le chaud, en associant de façon judicieuse des évaporateurs-mélangeurs à une source de chaleur résiduaire à bas niveau.

Ainsi, comme illustré à la figure 8, si l'on dispose d'une source de chaleur $Q_1$ à 25°C, on alimentera comme illustré en 68 le volume 69 d'échange fermé d'un côté par la plaque 70 de vaporisation du premier étage $EM_1$ d'un évaporateur-mélangeur, et de l'autre côté par le plaque 71 de condensation d'un évaporateur-mélangeur $EM_0$. Dans l'exemple illustré, l'évaporateur-mélangeur $EM_1$ est suivi d'un deuxième étage d'évaporateur-mélangeur, ces deux évaporateurs-malangeurs fonctionnant en série et formant pompe à chaleur comme il a été décrit précédemment notamment en relation avec les figures 1 et 3. Dans l'exemple illustré, on suppose que la paroi 72 extérieure de l'échangeur-mélangeur $EM_2$ est portée par exemple vers 65°C, permettant de chauffer vers 60°C le fluide caloporteur 73 assurant le chauffage de l'installation.

En ce qui concerne l'échangeur-mélangeur $EM_0$, celui-ci fonctionne en réfrigérateur, la surface 71a de la plaque 71 servant de surface de condensation sur laquelle ruisselle la saumure, ce qui permet par évaporation du film 75 d'eau sur la plaque 76 extérieure de l'échangeur-mélangeur $EM_0$ d'obtenir la réfrigération, par exemple de 5°C à 0°C d'un fluide frigoporteur en contact avec la face extérieure de la plaque 76.

On notera que dans une telle installation, et contrairement aux techniques classiques, il n'est pas plus cher ni plus difficile de produire du froid que du chaud, et l'installation totale n'est pas notablement compliquée.

Une situation particulièrement intéressante sera celle où le flux de chaleur Q3 fourni à la partie du bâtiment à chauffer sera égal, en valeur absolue, au flux de chaleur Q4 prélevé à la partie du bâtiment à refroidir. Dans ces conditions, il n'y aura même plus besoin de faire appel à un flux de chaleur ambiante, car on aura:

Q2—Q1=0.

D'autre part, de nombreux autres fluides que l'eau ou même des mélanges de fluides pourront être utilisés comme "solvants". Dans le cas d'utilisations à basses températures (0°C et en dessous), on prendra un fluide plus volatil que l'eau, par exemple l'amoniac, un alcool, etc... Dans le cas d'utilisations à hautes températures (200°C et au dessus), on utilisera un fluide moins volatil que l'eau, par exemple un métal volatil tel que mercure, cadmium, sodium...

## Revendications

1. Dispositif évaporateur-mélangeur pour la revalorisation d'énerige thermique à bas niveau utilisant le transfert d'énergie d'une première source à température donnée dite "source froide" vers une deuxième source à température plus élevée dite "source chaude" par évaporation d'un premier liquide porté à la température de la "source froide" et condensation de la vapeur dudit premier liquide qui se mélange avec un deuxième liquide à la température de la "source chaude", lesdits premier et deuxième liquides ayant à la même température des pressions de vapeur différentes, ledit dispositif étant du type comprenant un dispositif élémentaire constitué:

— d'une surface d'évaporation telle qu'une plaque ou analogue (1) d'échange thermique qui est en contact, par sa face extérieure (1A) avec le fluide caloporteur (3) de la source d'énergie à bas niveau et à température comprise entre celle de la source chaude et celle de la source froide, et sur la face intérieure (1B) de laquelle ledit premier liquide (5) est amené et circule ou ruisselle sensiblement à la température de la source froide, ladite face intérieure (1B) de la plaque formant surface d'évaporation communiquant avec un volume dans lequel s'effectue l'évaporation dudit premier liquide et qui est maintenu sous une pression sensiblement égale et de préférence légèrement inférieure à la pression de vapeur dudit premier liquide à ladite température de la source froide;

— et d'une surface de condensation telle qu'une plaque ou analogue (2) d'échange thermique qui est en contact par sa face extérieure (2A) avec le fluide caloporteur (4) permettant d'extraire le chaleur revalorisée produite sensiblement à la température de la source chaude, et sur la face intérieure (2B) de laquelle la vapeur dudit premier liquide se condense et se mélange audit deuxième liquide qui ruisselle sensiblement à la température de la source chaude, ladite face intérieure (2B) de la plaque formant surface de condensation communiquant avec ledit volume et étant disposée à faible distance et de préférence sensiblement en regard de ladite surface d'évaporation,

ledit dispositif étant caractérisé en ce que plusieurs dispositifs élémentaires mentionnés sont associés en série, la plaque de condensation du dispositif élémentaire de l'étage de rang *n* constituant par son autre face la plaque de vaporisation du dispositif élémentaire de l'étage de rang n+1.

2. Dispositif évaporateur-mélangeur selon la revendication 1, caractérisé en ce qu'il est prévu au moins une surface de séparation perforée de nombreux passages, telle qu'une grille ou feuille de métal déployé (11, 12) entre ladite surface d'évaporation et ladite surface de condensation de chaque étage.

3. Dispositif selon la revendication 1, caractérisé en ce que lesdits dispositifs élémentaires associés en série sont disposés cylindriquement et concentriquement.

4. Système utilisant un dispositif évaporateur-mélangeur selon la revendication 1 ou la revendication 2, caractérisé en ce que des échangeurs de chaleur (15, 16, 17) sont associés audit dispositif pour récupérer la chaleur latente des écoulements dudit deuxième liquide à la sortie de chaque étage et la transférer audit étage ou à un étage de rang supérieur (Fig. 5).

5. Système utilisant des dispositifs évaporateurs-mélangeurs selon la revendication 1, caractérisé en ce que la source d'énergie à bas niveau (Q1) dont on dispose fait fonctionner certains dispositifs précités (EM1, EM2) remontant la température du fluide caloporteur chaud (73) sortant du système, et en ce que ladite source d'énergie à bas niveau (Q1) fait fonctionner un autre dispositif précité (EM0) pour abaisser la température du fluide caloporteur froid (77) sortant du système, ladite source d'énergie (Q1) étant utilisée entre une surface de condensation (71) et une surface d'évaporation (70) entre deux étages d'évaporateurs-mélangeurs (EM0, EM1) (Fig. 8).

## Patentansprüche

1. Verdampfungs-Mischvorrichtung für die Aufwertung von thermischer Energie auf niedrigem Niveau unter Ausnutzung des Energieüberganges von einer ersten Quelle bei gegebener Temperatur, der "kalten Quelle", zu einer zweiten Quelle bei erhöhter Temperatur, der "warmen Quelle", durch Verdampfung einer ersten Flüssigkeit, die auf die Temperatur der "kalten Quelle" gebracht ist, und Kondensation des Dampfes der ersten Flüssigkeit, die sich mit einer zweiten Flüssigkeit bei der Temperatur der "warmen Quelle" mischt, wobei die erste und zweite Flüssigkeit bei derselben Temperatur unterschiedliche Dampfdrücke haben, wobei die Vorrichtung eine Grundvorrichtung aufweist mit:

— einer Verdampfungsoberfläche, wie z.B. eine Platte oder dergleichen (1), für den Wärmeaustausch, die sich über ihre äußere Fläche (1A) mit dem Wärmeübertragungsfluid (3) der Energiequelle auf niedrigem Niveau und bei einer Temperatur zwischen der der warmen Quelle und der der kalten Quelle in Kontakt befindet, wobei die erste Flüssigkeit (5) auf die Innenfläche (1B) der Oberfläche gebracht wird und umläuft oder rieselt bzw. rinnt, und zwar im wesentlichen bei der Temperatur der kalten Quelle, und wobei die Innenfläche (1B) der Platte die Verdampfungsoberfläche bildet, welche mit einem Volumen der ersten Flüssigkeit in Verbindung steht, in welchem die Verdampfung erfolgt, die auf einem Druck gehalten wird, der im wesentlichen gleich dem Dampfdruck der ersten Flüssigkeit bei der Temperatur der kalten Quelle und vorzugsweise etwas unter diesem Druck liegt;
— und einer Kondensationsoberfläche, wie z.B. eine Platte oder dergleichen (2), für den Wärmeaustausch, die sich durch ihre Außenoberfläche (2A) mit dem Wärmeübertragungsfluid (4) in Kontakt befindet, welches das Abziehen der aufgewerteten Wärme erlaubt, die im wesentlichen bei der Temperatur der warmen Quelle erzeugt ist, wobei auf der inneren Fläche (2B) der Oberfläche der Dampf der ersten Flüssigkeit sich kondensiert und mischt mit der zweiten Flüssigkeit, die im wesentlichen bei der Temperatur der warmen Quelle rieselt, und wobei die innere Fläche (2B) der Platte die Kondensationsoberfläche bildet, welche mit dem Volumen in Verbindung steht und in geringem Abstand und vorzugsweise im wesentlichen bezüglich der Verdampfungsoberfläche angeordnet ist,

dadurch gekennzeichnet, daß mehrere erwähnte Grundvorrichtungen in Reihe verbunden sind und daß die Kondensationsplatte der Grundvorrichtung der Stufe der Ordnung $n$ mit ihrer anderen Fläche die Verdampfungsplatte der Grundvorrichtung der Stufe mit der Ordnung $n+1$ bildet.

2. Verdampfungs-Mischvorrichtung nach Anspruch 1, dadurch gekennzeichnet, daß mindestens eine Trennoberfläche vorgesehen ist, die mit zahlreichen Durchgängen perforiert ist, wie z.B. ein Gitter oder eine Metallfolie (11, 12), die zwischen der Verdampfungsoberfläche und der Kondensationsoberfläche jeder Stufe ausgebreitet ist.

3. Vorrichtung nach Anspruch 1, dadurch gekennzeichnet, daß die in Reihe verbundenen Grundvorrichtungen zylindrisch und konzentrisch angeordnet sind.

4. System unter Verwendung einer Verdampfungs-Mischvorrichtung nach Anspruch 1 oder Anspruch 2, dadurch gekennzeichnet, daß Wärmetauscher (15, 16, 17) der Vorrichtung zur Wiedergewinnung der latenten Wärme der Abflüsse der zweiten Flüssigkeit am Ausgang jeder Stufe und zu ihrem Überführen an die genannte Stufe oder eine Stufe höherer Ordnung zugeordnet sind (Figur 5).

5. System unter Ausnutzung der Verdampfungs-Mischvorrichtungen nach Anspruch 1, dadurch gekennzeichnet, daß die Energiequelle bei niedrigem Niveau (Q1), über die man verfügt, gewisse vorgenannte Vorrichtungen (EM1, EM2) in Gang setzt unter Anheben der Temperatur des warmen Wärmeübertragungsfluids (73), welches aus dem System austritt, und daß die Energiequelle mit niedrigem Niveau (Q1) eine andere vorgenannte Vorrichtung (EM0) in Gang setzt, um die Temperatur des kalten Wärmeübertragungsfluids (77), welche aus dem System austritt, zu senken, und daß die Energiequelle (Q1) zwischen einer Kondensationsoberfläche (71) und einer Verdampfungsoberfläche (70) zwischen zwei Verdampfungs-Mischstufen (EM0, EM1) benutzt wird (Figur 8).

**Claims**

1. Evaporator-blender device for the recovery of low level heat energy, utilising the transfer of energy from a first source at a given temperature, referred to as the "cold source", to a second source which is at a higher temperature and which is referred to as the "hot source" by evaporation of a first liquid brought to the temperature of the "cold source" and condensation of the vapour from the said first liquid which blends with a second liquid at the temperature of the "hot source", the said first and second liquid being at the same temperature but at different vapour pressures, the said device being of the type which comprises an elementary apparatus consisting of:

—an evaporation surface such as a heat exchange panel of the like (1) which has its outer face (1a) in contact with the heat bearing medium (3) of the low level energy source and at a temperature comprised between that of the hot source and that of the cold source, and over the interior face (1b) of which the said first liquid (5) is conveyed and circulates or flows substantially at the temperature of the cold source, the said inner face (1b) of the panel forming the evaporation surface communicating with a volume in which evaporation of the said first liquid is carried out and which is maintained at a pressure substantially equal to and preferably slightly below the vapour pressure of the said first liquid at the said temperature of the cold source;

— and a condensation surface such as a heat exchange panel or the like (2) which has its outer face (2a) in contact with the heat bearing medium (4) making it possible to extract the recovered heat produced substantially at the temperature of the hot source and over the interior face (2b) of which the vapour of the said first liquid condenses and blends with the said second liquid which is running substantially at the temperature of the hot source, the said interior face (2b) of the panel forming a condensation surface communicating with the said volume or space and being disposed at a short distance from and preferably substantially opposite the said evaporation surface, the said device being characterised in that a plurality of the aforesaid elementary devices are associated in series, the condensation plate of the elementary device in row n being so disposed that its other face constitutes the evaporation plate of the elementary device in row n+1.

2. Evaporator-blender device according to Claim 1, characterised in that at least one separation surface is provided which comprises a number of passages, such as a grid or sheet of expanded metal (11, 12) between the said evaporation surface and the said condensation surface in each stage.

3. Device according to Claim 1, characterised in that the said elementary devices associated in series are disposed cylindrically and concentrically.

4. System employing an evaporator-blender device according to Claim 1 or Claim 2, characterised in that heat exchangers (15, 16, 17) are associated with the said device in order to recover the latent heat from flow of the said second liquid at the exit from each stage and to transfer it to the or to any higher stage (Fig. 5).

5. System employing evaporator-blender devices according to Claim 1, characterised in that the low level energy source (Q1) which is available causes certain aforesaid devices (EM1, EM2) to function, raising the temperature of the hot heat-bearing fluid (73) emerging from the system, and in that the said low level energy source (Q1) causes another aforesaid device to function (EM0) to lower the temperature of the cold heat bearing fluid (77) emerging from the system, the said energy source (Q1) being used between a condensation surface (71) and an evaporation surface (70) between two stages of evaporator-blender units (EM0, EM1) (Fig. 8).

FIG 1

FIG 2

FIG 3

FIG 4

FIG 5

FIG 6

FIG 7

**0 046 112**

FIG 8